(19) Europäisches Patentamt
European Patent Office
Office européen des brevets

(11) **EP 4 378 317 A1**

(12) **EUROPEAN PATENT APPLICATION**

(43) Date of publication:
**05.06.2024 Bulletin 2024/23**

(21) Application number: **22210852.4**

(22) Date of filing: **01.12.2022**

(51) International Patent Classification (IPC):
**A23C 20/00** (2006.01) **A23C 20/02** (2021.01)
**A23J 3/22** (2006.01) **A23J 3/26** (2006.01)
**A23P 30/20** (2016.01)

(52) Cooperative Patent Classification (CPC):
**A23C 20/02; A23C 20/025; A23J 3/22; A23J 3/26; A23P 30/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nikris ApS**
**3460 Birkerod (DK)**

(72) Inventor: **SØRENSEN, Niels Kristian**
**3460 Birkerød (DK)**

(74) Representative: **COPA Copenhagen Patents**
**Rosenørns Allé 1, 2nd floor**
**1970 Frederiksberg C (DK)**

(54) **A PLANT-BASED CHEESE-LIKE PRODUCT AND A METHOD FOR THE MANUFACTURE THEREOF**

(57) The present invention relates to a plant-based cheese-like product obtained by an extrusion process comprising the steps of: providing an extruder for high moisture extrusion, feeding the extruder with a plurality of ingredients including a starch-comprising product, a protein-comprising product, water, and oil, wherein the oil comprises less than 15% saturated fatty acids, processing the plurality of ingredients in the extruder to obtain a homogenous mass, and extruding and cooling the homogenous mass to form the plant-based cheese-like product.

EP 4 378 317 A1

**Description**

FIELD OF INVENTION

The present disclosure relates to a plant-based, healthy, and sustainable cheese-like product with functionality and taste profiles that match conventional cheese varieties. Furthermore, the present disclosure relates to a method of producing such a plant-based cheese-like product.

BACKGROUND

The climate challenge pushes the agriculture and food industry towards green transition. The dairy sector is under pressure due to the emissions of carbon dioxide and methane, and we look into a future with a diet much more plant based. Thus, the demand for high quality plant-based alternatives to milk and dairy products is high and increasing. Many plant-based alternatives to liquid milk have already been successfully introduced. Plant-based alternatives to cheese have also been introduced, but not with the same degree of success. One major reason is that the quality level of the introduced products (taste and product functionality) has been far from matching conventional cheeses. In addition, the overall composition of the plant-based alternatives is often dominated by high level of starch, absence or low levels of protein, palm/coconut oil and various additives (E-numbers) as processing aids - not really better alternatives to cheese but rather compromises.

Hence, it would be advantageous to have an organic, plant-based, natural, healthy, and sustainable cheese-like product with functionality and taste profiles that match conventional cheese varieties.

Roughly speaking, a conventional pizza cheese originating from milk is composed of 25 % fat (25 g/100 g), 25 % protein (25 g/100g) and 50 % moisture (50 g /100 g). 65 % of the fat (16 g/100 g) is saturated. The composition of plant-based pizza-toppings vary more but with some general characteristics: 15-25 % fat (15-25 g/100 g), 0-3 % protein (0-3 g/100 g), 20-25 % carbohydrates (20-25 g/100g) and 40-60 % moisture (40-60 g/100 g). The ratio of saturated fat is also above 60 % but often higher (80-90% of total fat) in these products due to the use of coconut oil or palm oil. The advantage of these fat types is that they have low melting points (solid or semisolid at ambient temperature) well mimicking the characteristics of milk fat. Thus, it eases the integration of high levels of fat into the plant-based cheese alternative leading to a homogenous mass, without oiling off during production or during pizza baking. However, since saturated fats are implied as a risk factor in cardiovascular diseases, it would be advantageous to have a cheese-like product with a low percentage of saturated fat. Unfortunately, vegetable oils with a lower percentage of saturated fat are difficult to integrate into the plant-based cheese alternatives with conventional methods.

Thus, it would be advantageous to obtain a homogenous plant-based cheese-like product with a high integration of fat but a low percentage of saturated fat. Furthermore, it would be advantageous to have a plant-based cheese-like product with lower level of carbohydrates and higher levels of protein and fibres compared to that of the prior art.

SUMMARY

It is an object of the present disclosure to provide an organic, plant-based, natural, healthy and sustainable cheese-like product with functionality and taste profiles that match conventional cheese varieties, with a high integration of fat, but a low percentage of saturated fat, lower level of carbohydrates and higher levels of protein and fibres compared to that of the prior art. Furthermore, it is an object of the present invention to provide a method of producing such a cheese-product, by a scalable process.

Thus, in a first aspect the present invention relates to a plant-based cheese-like product obtained by an extrusion process comprising the steps of:

    a. providing an extruder for high moisture extrusion,
    b. feeding the extruder with a plurality of ingredients including a starch-comprising product, a protein-comprising product, water and oil, wherein the oil comprises less than 15% saturated fatty acids,
    c. processing the plurality of ingredients in the extruder to obtain a homogenous mass, and
    d. extruding and cooling of the homogenous mass to form the plant-based cheese-like product.

In a second aspect, the present invention relates to an extrusion process for obtaining a plant-based cheese-like product comprising the steps of:

    a. providing an extruder for high moisture extrusion,
    b. feeding the extruder with a plurality of ingredients including a starch-comprising product, a protein-comprising product, water and oil, wherein the oil comprises less than 15% saturated fatty acids,

c. processing the plurality of ingredients in the extruder to obtain a homogenous mass, and
d. extruding and cooling of the homogenous mass to form the plant-based cheese-like product.

DETAILED DESCRIPTION

In a first aspect the present invention relates to a plant-based cheese-like product obtained by an extrusion process comprising the steps of:

a. providing an extruder for high moisture extrusion,
b. feeding the extruder with a plurality of ingredients including a starch-comprising product, a protein-comprising product, water and oil, wherein the oil comprises less than 15% saturated fatty acids,
c. processing the plurality of ingredients in the extruder to obtain a homogenous mass, and
d. extruding and cooling of the homogenous mass to form the plant-based cheese-like product.

Surprisingly, it has been found that extrusion of plant-based raw materials, water, and oil leads to a superior plant-based cheese-like product, suitable as a pizza-topping variant, salat cube variant, grill chunk variant or other cheese alternatives, matching the same high level of integrated fat as conventional plant-based cheese-like products, but with a radically reduced ratio of saturated fat (< 10 % instead of >60 % of the total amount of fat.

The present inventors found that extrusion of the plurality of ingredients allows the mixture of oil with a low amount of saturated fat with the raw materials and water for obtaining a homogenous mass with no free oil resulting in oil off during production or baking. Furthermore, a good taste and texture mimicking that of conventional cheese, such as mozzarella cheese, are obtained together with good meltability and browning capabilities.

Comparing the product profile with other vegan alternatives, the plant-based cheese-like product of the present invention also has a significantly increased protein and fibre content and a reduced carbohydrate/starch content. With conventional methods, the addition of protein has not been possible due to the negative effect on the meltability of the final product. However, using extrusion to mix the plurality of ingredients of the plant-based cheese-like product of the present invention, it has been found that it is possible to include a high level of protein and still get sufficient meltability of the final product. Thus, the plant-based cheese-like product of the present invention is a superior plant-based cheese-like alternative to existing plant-based cheese-like products.

The extrusion process of the present invention makes use of high moisture extrusion (HME) as a new continuous process technology as alternative to more conventional high-shear mixing (thermo-mixing). HME deviates from more conventional extrusion processes by adding thermic as well as mechanical energy to the plant base advancing the toolbox for optimizing product functionality such as firmness, meltability, and stretchability.

In some embodiments, the amount of saturated fat in the plant-based cheese-like product is less than 10% by weight, such as less than 5% by weight, such as less than 2% by weight, such as less than 2% by weight, such as 1.85% by weight or such as 1.74% by weight or such as 1.61% by weight. In some embodiments, the amount of saturated fat in the plant-based cheese-like product is between 1 and 10% by weight, such as between 1 and 5% by weight, such as between 1 and 2%, such as 1.85% by weight or such as 1.74% by weight or such as 1.61% by weight,

In some embodiments, the amount of fibres in the plant-based cheese-like product is more than 0.1% by weight, such as more than 0.5%, such as 0.7% by weight or such as 1.6% by weight or such as 2.4% by weight. In some embodiments, the amount of fibres in the plant-based cheese-like product is between 0.1% and 4% by weight, such as between 0.5% and 3% by weight, such as between 0.5% and 2.5% by weight, such as 0.7% by weight or such as 1.6% by weight or such as 2.4% by weight.

In some embodiments, the amount of protein in the plant-based cheese-like product is more than 3% by weight, such as more than 5% by weight, such as more than 6% by weight, such as 6.3% by weight or such as 9.0% by weight, or such as 11.7% by weight. In some embodiments, the amount of protein in the plant-based cheese-like product is between 3% and 15% by weight, such as between 5% and 12% by weight, such as 6.3% by weight or such as 9.0% by weight, or such as 11.7% by weight.

In some embodiments, the amount of carbohydrates in the plant-based cheese-like product is less than 20% by weight, such as less than 18% by weight, such as 17.4% by weight or such as 16.4% by weight, or such as 16.9% by weight. In some embodiments, the amount of carbohydrates in the plant-based cheese-like product is between 15% and 20% by weight, such as between 16% and 18% by weight, such as 17.4% by weight or such as 16.4% by weight, or such as 16.9% by weight.

In some embodiments, the step of feeding the extruder with a plurality of ingredients includes:

a. mixing of raw materials to form a first mass, wherein the raw materials comprise the starch-comprising product and the protein-comprising product,
b. dosing the first mass into the extruder,

c. adding water to the first mass in the extruder to form a second mass, and

d. adding oil to the first mass in the extruder to form a third mass.

In some embodiments, the protein-comprising product comprises a first protein-comprising product. In some embodiments, the protein-comprising product comprises a first protein-comprising product and a second protein-comprising product.

In some embodiments, the first protein-comprising product comprises at least 45% by weight protein, such as at least 50% by weight protein, such as at least 80% by weight protein. Furthermore, the first protein-comprising product may comprise other components such as starch, fat, salt, etc., but in a lower % by weight than the % by weight protein, e.g., less than 80%. In some embodiments, the first protein-comprising product is a powder.

In some embodiments, the second protein-comprising product comprises at least 20% by weight protein and at least 40% by weight water. Furthermore, the second protein-comprising product may comprise other components such as starch, fat, salt, etc., but in a lower % by weight than the % by weight starch, e.g., less than 20%. Only the amount of water is higher than the amount of protein in the second protein-comprising product. In some embodiment, the second protein-comprising product is a fermented protein slurry comprising a fermented protein-comprising product. The protein content in the product (if water is removed) is at least 40% by weight protein.

In general, a protein-comprising product is defined as one or more products where protein is the main nutrient in each product. By main nutrient is meant the nutrient present in the highest % by weight in the product. Other components may include, carbohydrates, fat, salt etc. Water is not defined as a component in this regard.

In some embodiments, the protein-comprising product according to the invention comprises one or more plant-based protein concentrates or isolates.

In some embodiments, the protein-comprising product comprises one or more of the following: pea protein concentrate, pea protein isolate, soybean concentrate, soybean isolate, oat protein concentrate, oat protein isolate, hemp protein concentrate, hemp protein isolate, chickpea protein concentrate, chickpea protein isolate, faba protein concentrate, faba protein isolate, milk protein concentrate, or milk protein isolate. In some embodiments, the protein-comprising product comprises a mixture of at least two of the following: pea protein concentrate, pea protein isolate, soybean concentrate, soybean isolate, oat protein concentrate, oat protein isolate, hemp protein concentrate, hemp protein isolate, chickpea protein concentrate, chickpea protein isolate, faba protein concentrate, faba protein isolate, milk protein concentrate, or milk protein isolate. However, other plant-based protein sources may also be suitable.

In preferred embodiments, the protein-comprising product comprises pea protein isolate. In preferred embodiments, the first protein comprising product is pea protein isolate.

In some embodiments, the protein-comprising product comprises a fermented protein product. In some embodiments, the second protein-comprising product comprises a fermented protein product. In some embodiments, the fermented protein product is fermented pea protein concentrate. However, it may also be pea protein isolate, soybean concentrate, soybean isolate, oat protein concentrate, oat protein isolate, hemp protein concentrate, hemp protein isolate, chickpea protein concentrate, chickpea protein isolate, faba protein concentrate, faba protein isolate, milk protein concentrate, or milk protein isolate or combinations thereof. In some embodiments, the fermented protein product is pea protein concentrate from Vestkorn™.

In preferred embodiments, the protein-comprising product comprises pea protein isolate and fermented pea protein concentrate. In some embodiments, the first protein-comprising product comprises pea protein isolate, and the second protein-comprising product comprises fermented pea protein concentrate.

The idea behind using a fermented protein product was to use lactic acid bacteria to ferment at least one raw material of the plant-based cheese-like product to create a natural basic taste, mask off-flavours and at the same time contribute to food safety and shelf life of the product.

In some embodiments, the extrusion process further comprises a step of providing the second protein-comprising product, comprising mixing a protein-comprising product with water, dextrose, and lactic acid bacteria culture to form a protein slurry. In some embodiments, the protein slurry comprises approximately 49% protein-comprising product, 49% water, 2% dextrose, and 0.02% lactic acid bacteria culture. In some embodiments, the protein slurry is incubated for a period of at least 48 hours at a temperature of approximately 37 degrees Celsius. The amount of fermented protein product is approximately 50% by weight of the protein slurry, while the rest of the protein slurry is water. Thus, the amount of the second protein-comprising product added to the extruder, includes water, and thus the protein concentration of the second protein-comprising product is lower than that of the fermented protein-comprising product, since the second protein-comprising product, e.g., the fermented protein slurry, is added to the extruder without separating the fermented protein-comprising product from the water.

In some embodiments, the lactic acid bacteria culture used for fermentation is capable of lowering the pH of the plant-based cheese-like product to below 5. In some embodiments, the lactic acid bacteria culture used for fermentation is Vibe™. Thus, in some embodiments, the pH of the plant-based cheese-like product is below 5.

In some embodiments, the second protein-comprising product is mixed with the other raw materials before dosing into the extruder. In some embodiments, the second protein-comprising product is dosed into the extruder together with the other raw materials.

In some embodiments, the starch-comprising product comprises a first starch-comprising product. In some embodiments, the starch-comprising product comprises a first starch-comprising product and a second starch-comprising product.

In some embodiments, the first starch-comprising product comprises at least 45% by weight starch, such as at least 50% by weight starch. Furthermore, the first starch-comprising product may comprise other components such as protein, fat, salt, etc., but in a lower % by weight than the % by weight starch, e.g., less than 50%. In some embodiments, the first starch-comprising product is provided as a powder.

In some embodiments, the second starch-comprising product comprises at least 45% by weight starch, such as at least 50% by weight starch. Furthermore, the first or second starch-comprising product may comprise other components such as protein, fat, salt etc, but in a lower % by weight than the % by weight starch, e.g., less than 50%. In some embodiments, the second starch-comprising product is provided as a powder.

In general, a starch-comprising product is defined as one or more products where starch is the main nutrient in each product. By main nutrient is meant the nutrient present in the highest % by weight in the product. Other components may include, protein, fat, salt etc. Water is not defined as a component in this regard.

In preferred embodiments, the starch-comprising product comprises potato starch and/or oat powder. In preferred embodiments, the first starch-comprising product is potato starch, and the second starch-comprising product is oat powder. The potato starch may be modified potato starch.

In preferred embodiments, the plurality of raw materials comprises pea protein isolate, oat powder and potato starch. In other preferred embodiments, the plurality of dry raw materials comprises pea protein isolate, oat powder, potato starch and a proteins slurry comprising fermented pea protein concentrate.

The main fat source in the plant-based cheese-like product of the present invention is a plant-based oil which is low in saturated fatty acids. The oil used in the plant-based cheese-like product comprises less than 15% saturated fatty acids, such as less than 10% saturated fatty acids, such as less than 7% saturated fatty acids, such as approximately 6% saturated fatty acids. Extrusion of the plurality of ingredients allows the mixture of oil with a low amount of saturated fat with the raw materials and water for obtaining a homogenous mass with no free oil resulting in oil off during production or baking.

Examples of oils comprising less than 15% saturated fatty acids are olive oil comprising approximately 13% saturated fatty acids, sunflower oil comprising approximately 14% saturated fatty acids, and rapeseed oil comprising approximately 6% saturated fatty acids.

In preferred embodiments, the oil is rapeseed oil.

In some embodiments, a fraction of the oil is dry blended with the raw materials to form the first mass, and the remaining fraction of the oil is added later.

In some embodiments, a fraction of the oil is added to the extruder at the same time as dosing of the first mass into the extruder, and the remaining fraction of the oil is added later.

In some embodiments, no oil is added to the extruder at the same time as dosing of the first mass into the extruder, and all the oil is added later.

In some embodiments, the oil is added to the extruder via a pump connected to the extruder after dosing of raw materials and addition of water.

In some embodiments, a salt is further dosed into the extruder. In some embodiments, the raw materials include a salt.

In some embodiments, an aroma or flavour is further dosed into the extruder.

In some embodiments, a colour for colouring the plant-based cheese-like product is further dosed into the extruder.

In some embodiments, the amount of the plurality of ingredients fed into the extruder is:

- 20-50% by weight of the protein-comprising product and the starch-comprising product, and/or
- 10-30% by weight of the oil, and/or
- 30-50% by weight of the water.

In some embodiments, the amount of protein-comprising product added to the extruder is at least 6% by weight, such as 6.9%, 16.8% or 26.7% by weight. In some embodiments, the amount of protein-comprising product in the plant-based cheese-like product is between 6-30% by weight, such as between 6% and 27% by weight, such as 6.9%, 16.8% or 26.7% by weight.

In some embodiments, the amount of the first protein-comprising product in the plant-based cheese-like product is at least 6% by weight, such as around 6.9% by weight. In some embodiments, the amount of the second protein-comprising product in the plant-based cheese-like product is between 0-25% by weight, such as between 0-20% by weight, such as 0%, 9.9% or 19.8% by weight, wherein between 0-12.5% by weight is fermented protein-comprising product, such as between 0-10% by weight, such as 0% by weight, 4.95% by weight, or 9.9% by weight.

In some embodiments, the amount of starch-comprising product in the plant-based cheese-like product is at least 10%, preferably at least 19% by weight, such as around 19.8% by weight or around 21.3% by weight or around 22.8% by weight. In some embodiments, the amount of starch-comprising product in the plant-based cheese-like product is between 10-25% by weight, such as between 19 and 23% by weight.

In some embodiments, the plurality of raw materials comprises between 5-8% by weight pea protein isolate, between 3-7% by weight oat powder, between 14-18% by weight potato starch, and between 0-25% by weight fermented protein slurry comprising fermented pea protein concentrate. In some embodiments, the plurality of dry raw materials comprises 6.9% by weight pea protein isolate, 5% by weight oat powder, between 14.9-17.8% by weight potato starch, and between 0-20% by weight fermented protein slurry comprising fermented pea protein concentrate.

In some embodiments, the amount of oil in the plant-based cheese-like product is at least 10% by weight, such as at least 15% by weight, such as at least 19% by weight, such as 19.8% by weight or such as 22.3% by weight or such as 24.8% by weight. In some embodiments, the amount of oil in the plant-based cheese-like product is between 10% and 30% by weight, such as between 19% and 25% by weight, such as 19.8% by weight or such as 22.3% by weight or such as 24.8% by weight.

In some embodiments, the amount of water added to the extruder is between 30-60% by weight of the cheese-like product, such as between 30% and 50% by weight, such as between 30% and 45% by weight, such as between 32 and 45%.

In preferred embodiments, the present invention relates to an extrusion process comprising the steps of:

    a. providing an extruder for high moisture extrusion,
    b. feeding the extruder with a plurality of ingredients including

        ◦ a starch-comprising product including potato starch and oat powder,
        ◦ a protein-comprising product including pea protein isolate and optionally a fermented protein slurry comprising fermented pea protein concentrate,
        ◦ water and
        ◦ rapeseed oil,

    c. processing the plurality of ingredients in the extruder to obtain a homogenous mass,
    d. extruding and cooling of the homogenous mass to form the plant-based cheese-like product,

In other preferred embodiments, the present invention relates to a plant-based cheese-like product obtained by an extrusion process comprising the steps of:

    a. providing an extruder for high moisture extrusion,
    b. feeding the extruder with a plurality of ingredients including

        ◦ at least 19% by weight of a starch-comprising product including potato starch and oat powder,
        ◦ at least 6% by weight of a protein-comprising product including pea protein isolate and optionally a fermented protein slurry comprising fermented pea protein concentrate,
        ◦ at least 30% by weight of water and
        ◦ at least 19% by weight of oil, wherein the oil comprises less than 7% saturated fatty acids,

    c. processing the plurality of ingredients in the extruder to obtain a homogenous mass,
    d. extruding and cooling of the homogenous mass to form the plant-based cheese-like product.

In other preferred embodiments, the present invention relates to a plant-based cheese-like product obtained by an extrusion process comprising the steps of:

    a. providing an extruder for high moisture extrusion,
    b. feeding the extruder with a plurality of ingredients including

        ◦ between 19-23% by weight of a starch-comprising product including potato starch and oat powder,
        ◦ between 6-27% by weight of a protein-comprising product including pea protein isolate, and optionally fermented protein slurry comprising fermented pea protein concentrate,
        ◦ between 30-45% by weight of water and

◦ between 19-25% by weight of oil, wherein the oil comprises less than 7% saturated fatty acids,

c. processing the plurality of ingredients in the extruder to obtain a homogenous mass,
d. extruding and cooling of the homogenous mass to form the plant-based cheese-like product.

In some embodiments, the extruder is a twin-screw extruder. In some embodiments, the twin-screw extruder is a Coperion, ZSK MvPLUS 27 Mc with 10 houses/barrels and an end flange whereon a die plate is mounted. The extruder may be equipped with a 31-kW engine, a screw diameter of 26.7 mm and a screw length of 1050 mm. The L/D ratio may be 39/1. Furthermore, each of the 10 houses/barrels and/or the flange may be equipped with temperature and pressure sensors.

In some embodiments, the twin-screw extruder comprises a plurality of sections, including a first section, a second section arranged downstream the first section and a third section arranged downstream the second section. In some embodiments, the first section includes one house/barrel, the second section includes two houses/barrels, and the third section includes seven houses/barrels.

In some embodiments, the first section comprises conveying elements, the second section comprises conveying elements and mixing elements, and the third section comprises conveying elements and mixing elements.

In some embodiments, the first base is dosed into the first section of the twin-screw extruder, water is dosed into the second section of the twin-screw extruder, and at least a fraction of the oil, such as the total amount of oil, is dosed into the third section of the twin-screw extruder.

In some embodiments, a first fraction of the total amount of oil is dosed into the first section of the twin-screw extruder together with the powder base, and a second fraction of the total amount of oil is dosed into the third section of the twin-screw extruder, wherein the first and second fractions of oil make up the total amount of oil.

In some embodiments, the first fraction of oil is 10-20% by weight of the total amount of oil, and the second fraction of oil is 80-90% by weight of the total amount of oil.

In some embodiments, the twin-screw extruder comprises heating means and/or temperature sensors and/or pressure sensors such that the temperature and pressure inside each section of the extruder can be controlled individually.

In some embodiments, the temperature in the different sections of the extruder is set.

In some embodiments, the first section is set to at least 40 degrees Celsius, such as 50 degrees Celsius, the second section is set to at least 60 degrees, such as 70 degrees Celsius, and the third section is set to at least 80 degrees Celsius, such as 90 degrees Celsius.

In some embodiments, the extruder is operated such that the specific mechanical energy (SME) is below 500 Wh/kg, preferably 300 Wh/kg, such as below 150 Wh/kg. If the SME is too high, the result is a very firm product and poor meltability after cooling.

In some embodiments, the extruder is operated such that the specific mechanical energy (SME) is below 150 Wh/kg, preferably below 100 Wh/kg, such as below 85 Wh/kg, such as below 70 Wh/kg. The SME effects the structure of the plant-based cheese-like product for semihard structure and good melting properties. If the SME is too high, the result is a very firm product and poor meltability after cooling.

In some embodiments, the extruder is operated such that the specific mechanical energy (SME) is between 40 and 200 Wh/Kg, preferably between 50 and 150 Wh/Kg, such as between 50 and 100 Wh/Kg.

The present inventors found that low SME is important for obtaining a semihard structure and good melting properties. If the SME is too high, the result is a very firm product and poor meltability after cooling.

Thus, in preferred embodiments, the present invention relates to a plant-based cheese-like product obtained by an extrusion process comprising the steps of:

a. providing an extruder for high moisture extrusion,
b. feeding the extruder with a plurality of ingredients including

◦ at least 19% by weight of a starch-comprising product including potato starch and oat powder,
◦ at least 6% by weight of a protein-comprising product including pea protein isolate, and optionally fermented protein slurry comprising fermented pea protein concentrate,
◦ at least 30% by weight of water and
◦ at least 19% by weight of oil, wherein the oil comprises less than 7% saturated fatty acids,

c. processing the plurality of ingredients in the extruder to obtain a homogenous mass,
d. extruding and cooling of the homogenous mass to form the plant-based cheese-like product, wherein the specific mechanical energy (SME) is below 500 Wh/kg, such as below 300 Wh/kg, such as below 150 Wh/kg.

In other preferred embodiments, the present invention relates to a plant-based cheese-like product obtained by an extrusion process comprising the steps of:

    a. providing an extruder for high moisture extrusion,
    b. feeding the extruder with a plurality of ingredients including

        ◦ between 19-23% by weight of a starch-comprising product including potato starch,
        ◦ between 6-17% by weight of a protein-comprising product including pea protein isolate, oat protein and optionally fermented protein slurry comprising fermented pea protein concentrate,
        ◦ between 30-45% by weight of water and
        ◦ between 19-25% by weight of oil, wherein the oil comprises less than 7% saturated fatty acids,

    c. processing the plurality of ingredients in the extruder to obtain a homogenous mass,
    d. extruding and cooling of the homogenous mass to form the plant-based cheese-like product, wherein the specific mechanical energy (SME) is below 500 Wh/kg, such as below 300 Wh/kg, such as below 150 Wh/kg.

The specific mechanical energy (SME) can be calculated using the following formula: screw speed/max screw speed*Pmax*Torque/100/Throughput*1000. The unit for SME is kW/kg/h or Wh/kg.

In some embodiments, the screw speed is 400-700 rpm, such as 410-610 rpm, Pmax is 30 kW, the torque is between 8 and 13, such as 9, 10, 11 or 12, and the throughput is between 13-15 kg/h. The throughput is the amount of dry raw materials, water, and oil added to the extruder.

In some embodiments, the second mass is processed in the extruder for between 20 and 60 seconds, such as between 25 and 50 seconds, such as between 30 and 45 seconds, such as between 30 and 40 seconds.

In some embodiments, in a step subsequent to extrusion, but before cooling, the homogenous mass is packed and sealed. In some embodiments, the homogenous mass is cooled down to less than 5 degrees Celsius.

In a second aspect, the present invention relates to an extrusion process for obtaining a plant-based cheese-like product comprising the steps of:

    a. providing an extruder for high moisture extrusion,
    b. feeding the extruder with a plurality of ingredients including a starch-comprising product, a protein-comprising product, water and oil, wherein the oil comprises less than 15% saturated fatty acids,
    c. processing the plurality of ingredients in the extruder to obtain a homogenous mass, and
    d. extruding and cooling of the homogenous mass to form the plant-based cheese-like product.

It is to be understood that embodiments disclosed in relation to the first aspect of the invention, namely a plant-based cheese-like product obtained by an extrusion process, also apply to the second aspect of the invention, namely an extrusion process for obtaining a plant-based cheese-like product.

**EXAMPLES**

**Example 1: Fermentation of a protein-comprising product and/or a starch-comprising product**

In conventional cheesemaking, the dairy products are fermented. Fermentation plays an important role in flavour formation and affects the durability of the final product. Thus, the present inventor wanted to test whether fermentation of plant-based alternatives to dairy products would produce the same positive effects in a plant-based cheese-like products.

Method:

Fermentation experiments were conducted aiming to test fermentability of various plant-based products using commercially available Lactic Acid Bacteria cultures.

Table 1: Lactic acid bacteria cultures tested for fermentation of plant-based products

| Culture | Provider, Batch |
|---|---|
| Classic | Chr. Hansen A/S |
| Harmony | Chr. Hansen A/S |
| Vibe | Chr. Hansen A/S |

(continued)

| Culture | Provider, Batch |
|---------|-----------------|
| TI-1 | Unknown |

The frozen concentrated cultures were thawed according to guidelines from the supplier and diluted 10 times by tap water.

Powders of pea protein concentrate, pea protein isolate, soy protein concentrate, soy protein isolate, mixture of pea, blend of potato starch, and oat powder were mixed 1:1 (w:w) with tap water and added 1 % dextrose (w/w) using a standard mixer for approx. two minutes and transferred to sealable plastic bags. Afterwards, inoculated 0,02 % with the lactic acid bacteria cultures of Table 1, stomaching followed by incubation at 37C.

Results:

In general, results showed that it was possible to ferment all bases using the standard lactic acid bacteria leading to a decrease in pH to around 4 after 2-7 days of incubation. The culture Vibe seemed to be the most effective by reaching final pH after maximum 48 hours incubation at 37C. The fermented bases were taste-evaluated after end of fermentation. The pea-taste in the plant-based products comprising pea was partly masked by the fermentation as the acid taste became dominating. The culture Vibe leads to the highest acidity score among the cultures tested.

**Example 2: High moisture extrusion versus thermo-mixing.**

Experiments were conducted to compare the effect of low and high shear thermo-mixing and high moisture extrusion on the texture and meltability of the plant-based cheese-like products of Table 2.

First, a protein slurry was produced using the ingredients of Table 2. The culture Vibe from Chr. Hansen A/S was used in recommended dose based on the results obtained in Example 1.

**Table 2:** Receipt on fermented protein slurry

| Ingredients | Product |
|-------------|---------|
| Pea protein concentrate | 49 % |
| Water | 49% |
| Dextrose | 2% |
| Culture Vibe | 0,02% |

Dextrose was stirred with water on a mixer on setting 2/15 for 1 min and 30 seconds. The culture was taken from frost and thawed over a water bath at between 15-25 degrees Celsius for between 6 and 30 minutes. The culture was mixed with water on a mixer on setting 2/15 for 25 seconds. Pea protein concentrate was mixed in the water/dextrose/culture and stirred on the mixer for 7 minutes and 30 seconds. First at low speed (setting 1/15) and then the speed was gradually increased to 8/15.

Table 3 below shows a plurality of ingredients mixed by thermo-mixing and extrusion, respectively, to form three different plant-based cheese-like products.

Two of the plant-based cheese-like products (17.1 and 18.1) comprise a protein slurry comprising fermented pea protein concentrate produced according to the method described above, i.e., comprising approximately 50% water. Thus, the amount of the fermented protein slurry added to the plant-based cheese-like products is the double of the amount of fermented pea protein concentrate actually present in the ingredients list shown in Table 3. In Table 4, the amount of water in the protein slurry is added to the total amount of water and the amount of fermented pea protein concentrate can be seen.

Table 3: Plurality of ingredients for the three different plant-based cheese-like products according to the invention. The fermented pea protein concentrate is added as a protein slurry comprising around 49% water, 49% pea protein concentrate, 2% dextrose and culture the lactic acid bacteria culture Vibe.

| Ingredient % by weight | Ingredient details | Product ID | | |
|---|---|---|---|---|
| | | 16.1 | 17.1 | 18.1 |
| Water | | 44.6 | 32.67 | 38.6 |
| Potato starch | CheeseMaker CF75 from KMC | 17.8 | 14.9 | 16.3 |
| Pea protein isolate | PISANE®C9 Pea protein isolate from Cosucra | 6.9 | 6.9 | 6.9 |
| Rapeseed oil | Raps Planteolie from Gourmet Partner | 24.8 | 19.8 | 22.3 |
| Oat powder | Bio Hafermehl GF from Dalby Mølle | 5.0 | 5.0 | 5.0 |
| Protein slurry comprising fermented Pea protein concentrate | Pea protein flour from Vestkorn, dextrose and lactic acid culture vibe from Chr. Hansen | 0.0 | 19.8 | 9.9 |
| Salt | | 1.0 | 1.0 | 1.0 |

CheeseMaker CF75 from KMC comprises around 81% by weight modified potato starch (acetylated di-starch adipate, E1422 and starch sodium octenyl succinate, E1450)

PISANE®C9 pea protein isolate from Cosucra comprises a range of protein isolates from the yellow pea and comprises 84-88% protein by weight of the product.

Raps Planteolie from Gourmet Partner comprising around 8% by weight saturated fat of the product.

Bio Hafermehl GF from Dalby Mølle comprising around 14% by weight protein, around 10% by weight fibres, around 7% fat, and around 57% by weight carbohydrates.

Pea protein flour from Vestkorn is a protein concentrate comprising around 54% by weight protein, around 14% by weight carbohydrates, around 4% by weight fat, and around 17% by weight dietary fibres.

Table 4: Plurality of ingredients for the three different plant-based cheese-like products according to the invention. The fermented pea protein concentrate is added as a protein slurry comprising around 49% water, 49% pea protein concentrate, 2% dextrose and culture the lactic acid bacteria culture Vibe.

| Ingredient % by weight | Ingredient details | Product ID | | |
|---|---|---|---|---|
| | | 16.1 | 17.1 | 18.1 |
| Water | | 44.6 | 42.6 | 43.6 |
| Potato starch | CheeseMaker CF75 from KMC | 17.8 | 14.9 | 16.3 |
| Pea protein isolate | PISANE®C9 Pea protein isolate from Cosucra | 6.9 | 6.9 | 6.9 |
| Rapeseed oil | Raps Planteolie from Gourmet Partner | 24.8 | 19.8 | 22.3 |
| Oat powder | Bio Hafermehl GF from Dalby Mølle | 5.0 | 5.0 | 5.0 |
| Fermented Pea protein concentrate | Pea protein flour from Vestkorn | 0.0 | 9.9 | 5.0 |
| Salt | | 1.0 | 1.0 | 1.0 |

Thermomixina:

The dry ingredients are mixed together. Water is weighed in the thermomixer, which is set to 90 degrees Celcius and stirred at setting 2/15. Water is added. After the water has been added, the dry ingredients are added while stirring at setting 2/15. The heat is maintained at 90 degrees Celsius, and the stirring is then turned up to 3.5/15. The speed is then adjusted to low speed (1.5/15 on the Thermomixer) for 5 min. The oil is added, and stirring is continued for 30 seconds, after which the mass is poured directly into a mould and refrigerated. For low shear, stirring must be up to 3 for 30 seconds. For high shear, stirring must be up to 4 for 1.5 min.

High moisture extrusion:

The raw materials of Table 3, including potato starch, pea protein isolate, and oat powder was dryblended and dosed into an extruder in section 1 together with a small fraction of the oil.

For sample 17.1 and 18.1, the fermented protein slurry was further added in section 1 together with the other raw materials. In section 2, tap water was dosed and in section 4 the remaining part of the oil was dosed. An external pump, which is normally not part of the extruder, was used to dose the oil into the extruder. After mixing, extrusion and cooling, the final plant-based cheese-like products leaves the extruder as a sauce-like liquid. The hot liquid is filled into forms, sealed and cooled down overnight to < 5C.

The extruder was a Coperion, ZSK MvPLUS 27Mc, which is a twin screw extruder (co-rotating) equipped with a 31-kW engine. The extruder consists of 10 elements/barrels and an end flange where the die plate is mounted. Screw diameter is 26.7 mm, and screw length is 1050 mm. The L/D ratio is 39/1. The extruder is equipped with sensors for both temperature and pressure. There are temperature sensors in all 10 houses and the sensor for material pressure and temperature mounted on the end flange just before the die plate. On the extruder, there is also the possibility of manually reading of the rotational speed, moment, temperature, and pressure of the material. Furthermore, the extruder is water-cooled in the independent sections.

Results:

High shear thermo-mixing of all components for all three recipes (16.1, 17.1 and 18.1) generally leads to homogenous liquid products with no free oil and the products could be hot-filled into forms. However, after cooling, the products in general became very firm with poor meltability after grinding. By reducing the mixing to low-shear, the firm consistency was significantly reduced and satisfactorily meltability was observed. However, low-shear mixing at the same time seemed insufficient to get the oil-fraction enough integrated into the plant-based cheese-like product.

The interesting findings were that high-moisture extrusion resulted in the same improved consistency and meltability results as for low-shear thermo-mixing, while still getting a homogenous liquid product with no free oil. Thus, it was decided to further look at the effect of SME on the plant-based cheese like product obtained by high moisture extrusion.

**Example 3: Composition and level of Specific Mechanical Energy (SME) impacts firmness, meltability and browning of plant-based cheese alternative after cooling**

Based on the preliminary observations in Example 2, Example 3 was conducted to confirm that low SME is important for reaching a semihard structure and good melting properties of the plant-based cheese-like product. Also, the pH and hardness of each sample were measured

The basic concept behind SME is to measure the energy going into the extrusion system per unit mass in the form of work from the motor and is an important factor for design engineering which directly affects the final product quality.

The specific mechanical energy (SME) was calculated using the following formula:

$$SME(Wh/kg) = Screwspeed(rpm) \ / \ MaxScrewspeed(rpm) \ * \ Pmax(kW) \ * \ Torque(\%) \ / \ 100 \ / \ Throughput \ (kg/h)*1000$$

The parameters was set in the extruder as follows:

MaxScrewspeed(rpm)= 1800

Screwspeed(rpm)= 410-610

Pmax(kW)= 30

Torque(%)= 9-12

Throughput(kg/h)= 13.73-14-63

The three different plant-based cheese-like products (16.1, 17.1 and 18.1, see Table 2) were processed in the extruder as described in Example 2 and using parameters according to Table 5. The plurality of ingredients was in the extruder for around 30-40 seconds.

**Table 5**: Settings of extruder.

| Coperion ZSK 27Mc settings | Unit | 16.1 low | 16.1 high | 16.1 high high | 17.1 low | 17.1 high | 17.1 high high | 18.1 low | 18.1 high |
|---|---|---|---|---|---|---|---|---|---|
| Max screw speed | rpm | 1800 | 1800 | 1800 | 1800 | 1800 | 1800 | 1800 | 1800 |
| Screw speed | rpm | 410 | 510 | 610 | 410 | 510 | 610 | 410 | 510 |
| Pmax | kW | 30 | 30 | 30 | 30 | 30 | 30 | 30 | 30 |
| Torque | % | 9 | 11 | 12 | 10 | 11 | 12 | 10 | 11 |
| Torque range | % | 9 | 11 | 11-12 | 10 | 11 | 12-13 | 10-11 | 11 |
| Dry matter | Kg/h | 4.4 | 4.4 | 4.4 | 6.6 | 6.6 | 6.6 | 5.5 | 5.5 |
| Water | Kg/h | 6.6 | 6.6 | 6.6 | 4.4 | 4.4 | 4.4 | 5.5 | 5.5 |
| Oil | Kg/h | 3.63 | 3.63 | 3.63 | 2.73 | 2.73 | 2.73 | 3.45 | 3.45 |
| Throughput | Kg/h | 14.63 | 14.63 | 14.63 | 13.73 | 13.73 | 13.73 | 14.45 | 14.45 |
| SME | Wh/kg | 42.76 | 42.76 | 42.76 | 68.7 | 68.7 | 68.7 | 85.75 | 85.75 |
| Barrel 2 | °C | 50 | 50 | 50 | 50 | 50 | 50 | 50 | 50 |
| Barrel 3 | °C | 70 | 70 | 70 | 70 | 70 | 70 | 70 | 70 |
| Barrel 4-10 | °C | 90 | 90 | 90 | 90 | 90 | 90 | 90 | 90 |
| Melt temp | °C | 86 | 87 | 87 | 87 | 87 | 88 | 86 | 87 |

**pH, hardness and sensory description after baking of plant-based cheese-like products:**

pH measurements:

Furthermore, pH was measured on all samples with a pH meter. 20 g of each of the 8 different samples of the plant-based cheese-like products was, as well as two controls, transferred to a beaker and mixed with 200 g of milli Q water so that a 1/10 dilution was made. The mixtures were blended with a stick blender until it was homogeneous. The pH of the liquid samples was measured while stirring with a magnetic stirrer. The pH measurements appear in Table 6.

Texture measurements:

Texture measurements on the plant-based cheese-like products were performed with Texture Analyzer. A block of the plant-based cheese-like products was used, with the rind cut off so that it had a uniform surface, and as far as possible the same thickness and surface for all samples. The texture analysis was set to test how much force was required to get 1 cm down into the sample. 5 determinations were performed for each sample, with a new location tested for each determination. The results can be seen in Table 6 below and are an average of the 5 determinations.

**Table 6**: pH and hardness of plant-based cheese-like products and controls.

| | | pH | Hardness, |
|---|---|---|---|
| 1 | 16.1 low | 6.72 | 1138.4 |
| 2 | 16.1 high | 6.76 | 910.9 |
| 3 | 16.1 highhigh | 6.75 | 973.6 |
| 4 | 17.1 low | 4.51 | 1912.8 |

(continued)

| | | pH | Hardness, |
|---|---|---|---|
| 5 | 17.1 high | 4.53 | 1475.9 |
| 6 | 17.1 highhigh | 4.53 | 1730.4 |
| 7 | 18.1 low | 4.93 | 1233.3 |
| 8 | 18.1 high | 4.94 | 1359.5 |
| C1 | Mozarella | 5.76 | - |
| C2 | Vegan grated cheese | 4.1 | - |
| C3 | Danbo cheese | - | 2488.0 |
| C4 | Grillcheese | - | 1008.3 |

Sensory description after baking:

A melting test was carried out by tearing the samples and spreading them out on a baking sheet, after which they were baked in the oven for 5-10 minutes at 210 degrees Celsius. A melting test was also tested on a pre-baked pizza base, where grated cheese was distributed over the base and baked for 9 min at 210 degrees Celsius. Table 7 is a short sensory description of the plant-based cheese-like products after baking on baking paper, regarding texture, taste and looks. Table 8 is a short sensory description of the plant-based cheese-like products after baking on a pizza base.

**Table 7**: Sensory description after melting test on baking sheet

| ID | Name | Texture | Taste | Looks (melting and browning capabilities) |
|---|---|---|---|---|
| 1 | 16.1 low | Slightly gritty, slightly crispy | neutral taste, a bit of off-flavours | melts easily, still visible grated pieces, not very good browning |
| 2 | 16.1 high | Less gritty compared to low, more homogenous | neutral taste, a bit of off-flavours | melts easily, still visible grated pieces, not very good browning |
| 3 | 16.1 high high | Less gritty compared to low and high | neutral taste, more taste, rounded taste, less off-flavours, more fatty taste than low and high | melts easily, still visible grated pieces, not very good browning |
| 4 | 17.1 low | Slightly gritty, crispy, a little chewy (positive) | Sour taste, less off-flavours, good taste from browning | Not melted very well, good browning |
| 5 | 17.1 high | Slightly gritty, crispy, chewy (positive) | Even more sour than 17.1, less off-flavours, good taste from browning | Not melted very well, good browning |
| 6 | 17.1 high high | The best of the three comprising fermented protein, more chewy | Less sour than 17.1 high, good taste from browning, more fatty taste than low and high | Not melted very well, good browning |
| 7 | 18.1 low | Slightly gritty, slightly crispy | No off-flavours, good taste from browning, good acidity balance | Good melting capability, good browning |
| 8 | 18.1 high | Slightly gritty, crispy | No off-flavours, good taste from browning, | Good melting capability, good browning |

Table 8: Sensory description after melting test on pizza

| ID | Name | Texture | Taste | Looks (melting and browning capabilities) |
|---|---|---|---|---|
| 1 | 16.1 low | Slightly gritty, lacks soft core | No off-flavours, neutral | Seems less melted than on baking sheet, almost no browning |
| 2 | 16.1 high | Slightly gritty, | No off-flavours, neutral | Seems less melted than on baking sheet, almost no browning |
| 3 | 16.1 high high | Slightly gritty, better core | No off-flavours, fatty taste | Seems less melted than on baking sheet, almost no browning |
| 4 | 17.1 low | Slightly gritty, crispy, soft core | No off-flavours, taste from browning, fermented taste | Not very good melting capability, good browning capability |
| 5 | 17.1 high | crispy, soft core | No off-flavours, taste from browning, some fermented taste | Not very good melting capability, good browning capability |
| 6 | 17.1 high high | crispy, very soft core | No off-flavours, taste from browning, some fermented taste, less sour and more fatty taste than low | Not very good melting capability, good browning capability |
| 7 | 18.1 low | crispy | No off-flavours, slightly sour, taste from browning, | Not very good melting capability, good browning capability |
| 8 | 18.1 high | Less gritty, | No off-flavours, sligtly sourt, good browning capability, more aligned taste for pizza | Not very good melting capability but better than 18.1 low, good browning capability |

Results:

Based on the results of Tables 7 and 8, overall, the best browning capability is seen in the plant-based cheese-like products comprising fermented protein slurry (17.1), while the lowest browning capability is seen in the sample not comprising fermented protein slurry (16.1). Sample 16.1 had the best melting ability, while both samples 17.1 and 18.1 did not have such good melting ability. In general, the acid in 17.1 and 18.1 was rated as a good thing but rated a little too strong in 17.1. In general, no off-taste was assessed in the samples. In general, the samples with High High shear were judged to be fatter in taste than the others.

In summary, sample 16.1 showed good meltability properties at all specific mechanical energies tested close to the reference cheese product (conventional mozzarella cheese). Sample 17.1. showed slightly lower meltability but had browning properties well mimicking the reference cheese product. Sample 18.1 had good meltability properties as well as browning properties.

In all cases, there was a tendency towards better meltability at the lowest specific mechanical energy. In previous laboratory experiments, this tendency was more pronounced, probably due to the use of much higher span of SME from low to very high. In the cases of very high SME, the final plant-based product became very firm after cooling with corresponding very poor meltability. Finally, grating properties were good in all samples.

**Example 5: Comparison of nutrients in the plant-based cheese-like product of the invention and nutrients in other plant-based cheese like products.**

| | Plant Based pizza-topping 16.1 | Plant Based pizza-topping 17.1 | Plant Based pizza-topping 18.1 | Violife | Organic Great me (Naturli') | Spir (Netto) | Vegan topping Herbivora revet (Falengren) | Økologisk mozzarella 20 % (Karolines Køkken) |
|---|---|---|---|---|---|---|---|---|
| Energy (Kcal) | 323,1 | 302,6 | 312,8 | 298 | 297 | 291 | 276 | 289 |
| Energy (kJ) | 1362,4 | 1275,7 | 1318,8 | 1247 | 1239 | 1218 | 1161 | 1203 |
| Fat | 25,8 | 21,2 | 23,5 | 24 | 17,8 | 21 | 23 | 20 |
| - Saturated fat (g and (%)) | 1,9 (7,2) | 1,6 (7,6) | 1,7 (7,4) | 22 (91,7) | 14,7 (82,6) | 18 (85,7) | 14 (60,9) | 13 (65,0) |
| Carbohydrates | 17,4 | 16,4 | 16,9 | 21 | 30 | 23 | 19 | 3 |
| - Sugars | 0,04 | 0,38 | 0,21 | 0 | 3,2 | 2 | 0 | 1 |
| Fibres | 0,7 | 2,4 | 1,6 | 0 | | 1,9 | | 0 |
| Protein | 6,3 | 11,7 | 9,0 | 0 | 2,6 | 0 | 0 | 24 |
| Salt | 1,4 | 1,4 | 1,4 | 1,7 | 3,3 | 2,0 | 0,9 | 1,4 |

**Table 9**: Composition plant-based cheese-like product of the invention, other plant-based cheese like products and a mozzarella cheese.

The amount of saturated fat shown in Table 9 is shown in g and percentage of total fat in the plant-based cheese-like products of the invention (16.1, 17.1 and 18.1) as well as in other plant-based cheese-like products (Violife, Organic great me, Spir, Vegan topping herbivora grated) and the conventional cheese (organic mozzarella 20%). Thus, the total amount of saturated fat in the plant-based cheese-like products of the invention, of other plant-based cheese like products, and in mozzarella cheese, can be seen below in Table 10.

**Table 10:** Total amount of saturated fat in the plant-based cheese-like products of the invention, other plant-based cheese like products and a mozzarella cheese.

| | 16.1 | 17.1 | 18.1 | Violife | Great me | Spir | herbivora grated | Organic mozzarella |
|---|---|---|---|---|---|---|---|---|
| Total amount of saturated fat | 1.85% | 1.61% | 1.74% | 22% | 14.7% | 18% | 14% | 13% |

Conclusion:

As can be seen from Table 9, the plant-based cheese-like product of the invention, referred to as 16.1, 17.1 and 18.1 in Table 9, has a different nutrient composition than plant-based cheese-like products of the prior art, including Violife, Organic great me, Spir, Vegan topping herbivora grated and organic mozzarella 20%. The mozerella cheese organic mozzarella is used as a reference to a conventional cheese.

The plant-based cheese-like product of the invention has approximately the same amount of fat as the plant-based cheese-like products of the prior art. However, the amount of saturated fat in the plant-based cheese-like product of the invention is greatly reduced compared to that of the plant-based cheese-like products of the prior art, namely less than 8% by weight of the total amount of fat, compared to >14% by weight of the total amount of fat. Furthermore, the total amount of saturated fat in the cheese-like products of the invention is less than 2%, compared to that of the plant-based cheese-like products of the prior art which is >13%. Thus, even though the total amount of fat is slightly higher in the cheese-like products of the invention compared to that of the plant-based cheese-like products of the prior art, the amount of saturated fat is greatly reduced. Normally, the level of saturated fat is high in plant-based cheese like products, since a homogenous mass with no oiling fat can only be produced using oils with a high amount of saturated fat, such as palm oil or coconut oil. However, using the extrusion process according to the present invention, oils with a low amount of saturated fat can also be used, and thus it is possible to get a plant-based cheese like product comprising a low amount saturated fat.

Furthermore, the amount of carbohydrates and salt in the plant-based cheese-like product of the invention is also reduced compared to the plant-based cheese-like products of the prior art, namely less than 18% by weight, compared to >19% by weight and less than 1.5% by weight compared to more than 1.5% in general, respectively.

Finally, the amount of protein and fibres is increased in the plant-based cheese-like product of the invention compared to the plant-based cheese-like products of the prior art. With regard to protein, the amount is above 6% by weight in the plant-based cheese-like product of the invention, whereas the plant-based cheese-like products of the prior art have a protein amount of less than 3% by weight. Normally, the level of protein is low in plant-based cheese-like products, since a plant-based cheese-like product with high protein levels has an undesirable texture and poor melting capabilities. However, due to the extrusion process, the texture and melting capabilities are acceptable for the plant-based cheese-like product of the present invention, even with a protein level between 6 and 12%. With regard to fibres, the amount is between 0.7 and 2.4% by weight in the plant-based cheese-like product of the invention, whereas the plant-based cheese-like products of the prior art generally do not comprise fibres, with exception of Spir, which comprises 1.9% by weight fibres.

**Claims**

1. A plant-based cheese-like product obtained by an extrusion process comprising the steps of:

    a. providing an extruder for high moisture extrusion,
    b. feeding the extruder with a plurality of ingredients including a starch-comprising product, a protein-comprising product, water, and oil, wherein the oil comprises less than 15% saturated fatty acids,
    c. processing the plurality of ingredients in the extruder to obtain a homogenous mass, and
    d. extruding and cooling of the homogenous mass to form the plant-based cheese-like product.

2. A plant-based cheese-like product according to claim 1, wherein the protein-comprising product is defined as one or more products where protein is the main nutrient and the starch-comprising product is defined as one or more products where starch is the main nutrient, wherein the main nutrient in a product is defined as the nutrient present in the highest % by weight in the product.

3. A plant-based cheese-like product according to claim 1, wherein

    - the amount of saturated fat in the plant-based cheese-like product is less than 10% by weight, such as less than 5% by weight, such as less than 2% by weight, such as 1.85% by weight or such as 1.74% by weight or such as 1.61% by weight, and/or
    - the amount of fibres in the plant-based cheese-like product is more than 0.1% by weight, such as more than 0.5, such as 0.7% by weight, or such as 1.6 by weight, or such as 2.4% by weight, and/or
    - the amount of protein in the plant-based cheese-like product is more than 3% by weight, such as more than 5% by weight, such as more than 6% by weight, such as 6.3% by weight, or such as 9.0% by weight, or such as 11.7% by weight, and/or
    - the amount of carbohydrates in the plant-based cheese-like product is less than 20% by weight, such as less than 18% by weight, such as 17.4% by weight, or such as 16.4% by weight, or such as 16.9% by weight.

4. A plant-based cheese-like product according to any of the preceding claims, wherein the step of feeding the extruder with the plurality of ingredients includes:

    a. mixing raw materials to form a first mass, wherein the raw materials comprise the starch-comprising product and the protein-comprising product,
    b. dosing the first mass into the extruder,
    c. adding water to the first mass in the extruder to form a second mass, and
    d. adding oil to the second mass in the extruder to form a third mass.

5. A plant-based cheese-like product according to any of the preceding claims, wherein the protein-comprising product comprises at least two of the following: pea protein concentrate, pea protein isolate, soybean concentrate, soybean isolate, oat protein concentrate, oat protein isolate, oat protein, chickpea protein concentrate, chickpea protein isolate, faba protein concentrate, faba protein isolate, milk protein concentrate, or milk protein isolate.

6. A plant-based cheese-like product according to any of the preceding claims, wherein the protein-comprising product comprises a fermented protein-comprising product.

7. A plant-based cheese-like product according to any of the preceding claims, wherein the fermented protein-comprising product is added to the extruder as a fermented protein slurry provided by mixing at least one protein-comprising product with water, dextrose, and lactic acid bacteria culture to form a protein slurry, and incubation of the protein slurry is performed to form the fermented protein slurry.

8. A plant-based cheese-like product according to any of the preceding claims, wherein the pH of the plant-based cheese-like product is below 5.

9. A plant-based cheese-like product according to any of the preceding claims, wherein the starch-comprising product comprises potato starch and/or oat powder.

10. A plant-based cheese-like product according to any of the preceding claims, wherein the oil is rapeseed oil.

11. A plant-based cheese-like product according to any of the preceding claims, wherein the extruder is a twin-screw extruder.

12. A plant-based cheese-like product according to any of the preceding claims, wherein the extruder is operated such that the specific mechanical energy (SME) is below 500 Wh/kg, preferably below 300 Wh/kg, such as below 150 Wh/kg, such as below 100 Wh/kg, such as below 85 Wh/kg, such as below 70 Wh/kg.

13. A plant-based cheese-like product according to any of the preceding claims, wherein the amount of the plurality of ingredients fed into the extruder is:

    - 20-50% by weight of the protein-comprising product and the starch-comprising product, and/or
    - 10-30% by weight of the oil, and/or
    - 30-50% by weight of the water.

14. A plant-based cheese-like product obtained by an extrusion process comprising the steps of:

    a. providing an extruder for high moisture extrusion,
    b. feeding the extruder with a plurality of ingredients including

      ∘ between 19-23% by weight of a starch-comprising product including potato starch and oat powder,
      ∘ between 6-27% by weight of a protein-comprising product including pea protein isolate, and optionally fermented protein slurry comprising fermented pea protein concentrate,
      ∘ between 30-45% by weight of water and
      ∘ between 19-25% by weight of oil, wherein the oil is rapeseed oil

    c. processing the plurality of ingredients in the extruder to obtain a homogenous mass,
    d. extruding and cooling of the homogenous mass to form the plant-based cheese-like product, wherein the specific mechanical energy (SME) is below 300 Wh/kg, such as below 150 Wh/kg.

15. An extrusion process for obtaining a plant-based cheese-like product comprising the steps of:

    a. providing an extruder for high moisture extrusion,
    b. feeding the extruder with a plurality of ingredients including a starch-comprising product, a protein-comprising product, water, and oil, wherein the oil comprises less than 15% saturated fatty acids,
    c. processing the plurality of ingredients in the extruder to obtain a homogenous mass, and
    d. extruding and cooling of the homogenous mass to form the plant-based cheese-like product.

Europäisches
Patentamt

European
Patent Office

Office européen
des brevets

# EUROPEAN SEARCH REPORT

Application Number

EP 22 21 0852

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/217996 A1 (HOMYAK CELIA [US] ET AL) 14 July 2022 (2022-07-14) * paragraph [0195]; figure 2C; example 4; tables 2,15,16 * | 1-5, 10-12,15 | INV. A23C20/00 A23C20/02 A23J3/22 A23J3/26 A23P30/20 |
| X | EP 4 005 400 A1 (KERRY LUXEMBOURG S A R L [LU]) 1 June 2022 (2022-06-01) | 9,13,14 | |
| Y | * paragraphs [0011] – [0015], [0019], [0020], [0026] – [0029], [0031], [0035], [0036], [0039] – [0046]; examples 1,2 * | 6-9,13, 14 | |
| Y | US 2022/030902 A1 (DURAND FABIEN [FR] ET AL) 3 February 2022 (2022-02-03) * paragraphs [0041] – [0043], [0053], [0065], [0085], [0155] – [0157], [0159], [0247]; examples 2,5 * | 6-9,13, 14 | |
| T | WO 2023/021428 A1 (ROY DEBASHREE [NZ]; WANG YIRAN [NZ] ET AL.) 23 February 2023 (2023-02-23) * claims 1,8,10 * | 1-15 | |

TECHNICAL FIELDS
SEARCHED (IPC)

A23C
A23P
A23J

The present search report has been drawn up for all claims

| Place of search | Date of completion of the search | Examiner |
|---|---|---|
| Munich | 17 May 2023 | Muller, Isabelle |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 0852

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2023

| Patent document cited in search report | | Publication date | Patent family member(s) | | Publication date |
|---|---|---|---|---|---|
| US 2022217996 | A1 | 14-07-2022 | US | 2022217996 A1 | 14-07-2022 |
| | | | WO | 2022155240 A1 | 21-07-2022 |
| EP 4005400 | A1 | 01-06-2022 | EP | 4005400 A1 | 01-06-2022 |
| | | | WO | 2022112268 A1 | 02-06-2022 |
| US 2022030902 | A1 | 03-02-2022 | AR | 123096 A1 | 26-10-2022 |
| | | | AR | 123097 A1 | 26-10-2022 |
| | | | AR | 123098 A1 | 26-10-2022 |
| | | | AU | 2021209310 A1 | 17-02-2022 |
| | | | AU | 2021209311 A1 | 17-02-2022 |
| | | | AU | 2021209317 A1 | 17-02-2022 |
| | | | BR | 102021015123 A2 | 15-02-2022 |
| | | | BR | 102021015133 A2 | 15-02-2022 |
| | | | BR | 102021015151 A2 | 15-02-2022 |
| | | | CA | 3126523 A1 | 31-01-2022 |
| | | | CA | 3126556 A1 | 31-01-2022 |
| | | | CA | 3126588 A1 | 31-01-2022 |
| | | | CL | 2021002025 A1 | 18-04-2022 |
| | | | CL | 2021002026 A1 | 01-07-2022 |
| | | | CL | 2021002027 A1 | 01-07-2022 |
| | | | CN | 114052221 A | 18-02-2022 |
| | | | CN | 114052232 A | 18-02-2022 |
| | | | CN | 114052233 A | 18-02-2022 |
| | | | EP | 3944767 A2 | 02-02-2022 |
| | | | EP | 3944771 A2 | 02-02-2022 |
| | | | EP | 3944772 A2 | 02-02-2022 |
| | | | JP | 2022027689 A | 14-02-2022 |
| | | | JP | 2022027690 A | 14-02-2022 |
| | | | JP | 2022027691 A | 14-02-2022 |
| | | | KR | 20220015988 A | 08-02-2022 |
| | | | KR | 20220015989 A | 08-02-2022 |
| | | | KR | 20220016448 A | 09-02-2022 |
| | | | PH | 12021050355 A1 | 14-02-2022 |
| | | | TW | 202205965 A | 16-02-2022 |
| | | | TW | 202215972 A | 01-05-2022 |
| | | | TW | 202220563 A | 01-06-2022 |
| | | | US | 2022030901 A1 | 03-02-2022 |
| | | | US | 2022030902 A1 | 03-02-2022 |
| | | | US | 2022030921 A1 | 03-02-2022 |
| WO 2023021428 | A1 | 23-02-2023 | NONE | | |

EPO FORM P0459

For more details about this annex : see Official Journal of the European Patent Office, No. 12/82